# EUROPEAN PATENT SPECIFICATION

(11) **EP 3 639 254 B1**
(45) Date of publication and mention of the grant of the patent: **28.12.2022**
(21) Application number: 18732692.1
(22) Date of filing: 08.06.2018
(51) Int. Cl.: G08G 1/14, A47G 1/16, G09F 27/00, G09F 7/22, G08B 5/22, G08G 3/00, G09F 7/00

(54) **DEVICE AND METHOD FOR INDICATION OF AVAILABILITY OF OCCUPIABLE SPACE**
VORRICHTUNG UND VERFAHREN ZUR ANZEIGE DER VERFÜGBARKEIT VON BELEGBAREM RAUM
DISPOSITIF ET PROCÉDÉ D'INDICATION DE LA DISPONIBILITÉ D'UN ESPACE POUVANT ÊTRE OCCUPÉ

(30) Priority: 15.06.2017 SE 1750764
(43) Date of publication of application: 22.04.2020
(73) Proprietor: Outsmart AB, 246 57 Barsebäck (SE)
(72) Inventor: LEANDERSSON, Carl Fredrik, 246 57 Barseb ck (SE)
(74) Representative: Zacco Sweden AB
(86) International application number: PCT/EP2018/065147
(87) International publication number: WO 2018/228937

(56) References cited:
- WO-A1-2015/061547
- US-A1- 2011 050 442
- US-A1- 2017 122 005
- US-B1- 6 307 472
- US-B1- 6 782 649

## Description

### TECHNICAL FIELD

The invention pertains to the field of availability indicators. More particularly, it relates to device and methods for indication of availability of an occupiable space.

### BACKGROUND

Availability indicators are utilized to indicate availability at various locations. One area of interest is availability indicators of boat berths at guest harbours. Traditional availability indicators or availability signs at guest harbours are weather resistant mechanical signs, one sign positioned at each boat berth. Moreover, the availability of the boat breath is indicated by a visible indication on the sign. The sign can for example be painted in red colour on one side and green colour on the other side and in order to change the availability status the sign or part of the sign, often needs to be manually moved, turned or rotated. Since the availability indicators often are positioned at each boat berth its might be troublesome for the owner of the guest harbour, a visitor, or a potential visitor, to get information if there are available boat berths, and in case boat berths are available, where these are located.

Hence, there is a need for an availability indicator that simplifies the findings of available spots.

The documents US 2011/050442 A1 and WO 2015/061547 A1 both disclose solutions for indicating whether a chair is occupied.

The document US 2017/122005 A1 discloses a solution for indicating whether a toilet is occupied.

### SUMMARY

In the present disclosure, an availability indicator, a method in an availability indicator and an availability indicator system are presented that provide features that simplify the findings of available spots, e.g. available boat berths.

According to a first aspect the objective is obtained by an availability indicator for indication of availability of an occupiable space. The availability indicator is specified in claim 1.

An availability indicator is provided where the status of the availability indicator, i.e. occupied or available, can be monitored at a position far away from the actual position of the availability indicator. For example, it is easy to communicate the state of a berth spot in a leisure craft marina - occupied or available. In addition, the indicator system simplifies the advertising and location of solitary berth spots in remote locations. It is further provided for flexibility in the determination of the state of the availability indicator since both a change of position and a current position can be detected.

Hence, mechanical features are present enabling the availability indicator to move its indicating part and to detect the movement between the at least two positions in order to indicate a state of availability.

According to some embodiments, at least one of the one or more detectors may be positioned in a horizontal dimension between the first part of the first mounting bracket and the first part the second mounting bracket and is positioned in a vertical dimension above a horizontal center line of the indicating part when the indicating part is in the first position or in the second position.

Hence, mechanical features are present enabling the availability indicator to detect the current position of the indicating part in order to indicate the state of availability.

According to some embodiments, the one or more detectors comprise at least one of a motion registration device, a gyro, an accelerometer, a tilt switch, a capacitive sensor, a magnetic flux sensor and a magneto resistive switch. Each configured to detect at least one of the change of position of the indicating part (25) and the current position (A, B) of the indicating part (25)

Flexibility is given when it comes to the design and the features of the detector.

According to some embodiments, the availability indicator further comprises an energy harvesting device for powering the one or more detectors.

That is, an energy self-supporting availability indicator is provided.

According to a second aspect the objective is obtained by a method at an availability indicator.

The availability indicator is specified by claim 1. The method comprises detecting in the one or more detectors at least one of a change of position of the indicating part and a current position of the indicating part. Further, in response to the detection, wirelessly transmitting, to a remote entity, at least one of a position change signal indicative of the change of position of the indicating part and a position status signal indicative of the current position of the indicating part.

According to a third aspect the objective is obtained by an availability monitoring system. The system comprises one or more availability indicators according to the first aspect and associated embodiments. The system further comprises one or more remote entities and one or more user equipment. Moreover, the one or more remote entities are configured to receive, from the one or more availability indicators, at least one of the position change signal indicative of the change of position and a position status signal indicative of the current position of the indicating part. The one or more remote entities are further configured to cause, in response to the reception, generation of an availability indication and transferring of the availability indication to a user interface of one or more user equipment.

Hence, an availability monitoring system is presented where a remote user with ease can pin point available spots. For example, a utilization of the system in a guest harbour may provide a surveyable and easy-to- access mapping of available marina berth spots for leisure craft.

In some embodiments, the third aspect may comprise features corresponding to those of the first and/or second aspects and their associated embodiments.

Thus, there is provided herein devices, methods and systems for indication of availability of occupiable space that simplifies the findings of available spots. In some embodiments, any of the above aspects may additionally have features and/or advantages identical with or corresponding to any of the various features and/or advantages as explained above for any of the other aspects and/or associated embodiments.

### BRIEF DESCRIPTION OF THE DRAWINGS

Figure 1a is a schematic drawing illustrating a front view of an example availability indicator according to some embodiments;
Figures 1b-e are schematic drawings illustrating a side view of an example availability indicator in various positions according to some embodiments;
Figures 2a-2c are schematic drawings illustrating different views of an example availability indicator according to some embodiments;
Figure 3 is a schematic drawing illustrating a front view of an example availability indicator according to some embodiments;
Figure 4 is a schematic drawing illustrating a front view of an example availability indicator according to some embodiments;
Figure 5 is a flowchart illustrating example method steps according to some of the embodiments; and
Figure 6 is a schematic drawing illustrating an example availability monitoring system according to some embodiments.

### DETAILED DESCRIPTION

Aspects of the present disclosure will be described more fully hereinafter with reference to the accompanying drawings. The device and method disclosed herein can, however, be realized in many different forms and should not be construed as being limited to the aspects set forth herein. Like numbers in the drawings refer to like elements throughout. The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

For better understanding of the invention, a typical scenario where the invention may be implemented is described. This scenario should not be seen as limiting and the availability indicator may be utilized as suitable in any other situations where a state of an occupiable space needs to be known.

During the summer months, there is a high turnover of boat berths in a marina. Some visitors only stay for a couple of hours while others occupy a berth for a whole season and only leave for small day trips. To indicate if a boat berth is available, manual mechanical availability signs are often positioned at each boat berth. Hence, there exist different kinds of manual, mechanical, infrastructure for identification of available berth spots.

A commonly used type of availability indicator is a sign consisting of a flat surface where one part is coloured green (signalling availability) and one part is coloured red (signalling occupied). A sliding plate mounted on the flat surface. The sliding plate is large enough to cover either the part coloured red or the part coloured green, respectively. The sliding plate is manually moved in order to change the state of availability of the boat berth.

Another sign works according to a similar concept with red and green colour to indicate occupancy/availability, see USD634787. In order to change the state of availability of this sign, a manual rotation of the sign is required.

One drawback with these signs is that each sign is positioned at a corresponding boat berth. Hence, it is very troublesome for the owner of the guest harbour to get an overview of the occupancy rate. Moreover, it is not easy for a guest, or a potential guest, to get knowledge whether there are free berth spots and if free spots are available, where these are located. The guest either has to call the personnel of the guest harbour who then has to walk around the whole harbour looking for a free spot or the potential guest needs to pay a visit to the guest harbour and manually seek for a free spot. Altogether, a very time consuming and thereby money consuming activity. Moreover, the potential guest may get annoyed leaving the harbour with a low customer satisfaction.

The claimed subject matter aims at mitigating at least some of the described obstacles. One objective is to provide different kinds of mechanical solutions where different kinds of sensors can be utilized to determine the state of availability of each sign. The signs according to some embodiments are further equipped with transmitter means capable of transmitting information regarding the availability of the sign to a remote entity from where it can be required by e.g. the personnel of the guest harbour, guests and potential guests of the harbour. The time spent on manually checking the states of the berth signs are heavily reduced. Additionally or alternatively, potential guests can check the availability status of different guest harbours without being required to be there in person. Further, the risk of misunderstanding and overbooking is reduced, the more the probability for any state of ambiguity of the availability indication can be reduced.

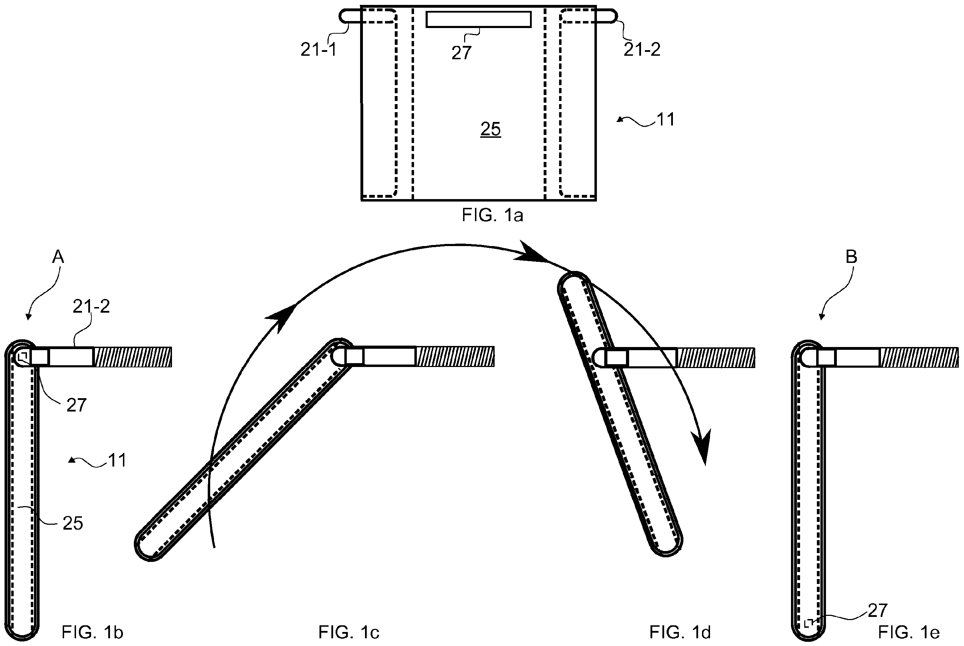

The claimed subject matter is now described in more detail referring to Figures 1a-1e. Figure 1a illustrates a front view of an example availability indicator 11 for indication of availability of an occupiable space according to a first aspect. An availability indicator can for example be a sign or any other device signalling a state of availability of an occupiable space. A non-exhaustive list of examples where an availability indicator may be utilized is to signal occupancy/availability of a desk in an open office space or library, a bookable table in a restaurant, a parking lot, a camping site, a restroom or a conference room.

The availability indicator comprises one or more mounting brackets 21-1, 21-2 fixable to a mounting surface. Hence, according to examples, these mounting brackets are configured such that they can be fixated to e.g. a pole, a wall, a door, a berth, a pier, etc. or any other suitable mounting surface. In one example screws, nails or equivalent fastening means are utilized to mount the mounting brackets to the mounting surface. Figure 1a illustrates two separate mounting brackets, 21-1, 21-2, in another example only one U-shaped, with sharp corners, mounting bracket is present.

The availability indicator further comprises an indicating part 25 movably connected to the one or more mounting brackets 21-1, 21-2. According to examples, the indicating part is a part of the availability indicator that enables the availability indicator to signal a state of availability. In one example the indicating part is coloured in green on a front side and coloured in red on a back side. The availability state is then changed by turning/rotating the indicating part. In another example the indicating part is constructed to cover a part of the availability indicator. For example, a text saying "free" is covered leaving a text saying "occupied" visible, in order to signal that the spot is taken.

As illustrated in Figures 1b-1e, which show example side views of the availability indicator illustrated in Figure 1a, the indicating part 25 is movable, between at least two positions A, B, in relation to the one or more mounting brackets 21-1, 21-2. Figure 1b illustrates a first position A, where a detector 27 is located between the mounting brackets (only 21-2 is visible). In Figures 1c and 1d, the indicating part 26 is rotated and moved in relation to the mounting brackets. Hence, the mounting brackets are essentially stationary and do not move when the indicating part is transferred between the positions. In Figure 1e, position B has been reached, and the detector 27 is no longer positioned between the mounting brackets.

The positions indicate different states of availability. In the example of the availability indicator shown in Figures 1a-1e, one side of the availability indicator is green indicating that the spot is available and the other side is red indicating that the spot is occupied. In other words, the at least two positions A, B comprise a first position A and a second position B. The first position A indicating vacancy of the occupiable space and the second position B indicating occupancy of the occupiable space. Vacancy may according to examples mean that the spot is free to use, whereas occupancy may according to examples mean that the spot is reserved, taken or busy. According to further examples, even other states may be displayed, e.g. "cooked" and "raw".

The example availability indicator shown in Figures 1a-1e is further unambiguous when it comes to indicating the state of availability. There is no uncertainty of which position that is presently valid.

In another example, the indicating part is movable between three positions, they may indicate: "available", "available until {time}", and "occupied", respectively.

The availability indicator further comprises one or more detectors 27. Hence, the availability indicator comprises electronic circuitry in addition to being a manually managed availability indicator. The one or more detectors are configured to detect at least one of a change of position of the indicating part 25 and a current position A, B of the indicating part 25. In one example, at least one detector comprises means that are configured to observe and register the absolute position (e.g. the first position A or the second position B) of the indicating part. In another example, at least one detector comprises means that are configured to observe and register that the indicating part is changing its position (e.g. from the first position A to the second position B or the other way around). A change of position may also be a change of position of the indicating part in relation to the one or more mounting brackets. In a further example, at least one detector comprises means that are able to perform both of the abovementioned tasks.

In some embodiments the detection is executed when the indicating part is moved between positions. The detection may also take place at different time intervals, the triggering of the detection may for example be determined in response to a trigger signal from e.g. a counter or a real time counter. Hence, according to examples, the availability indicator may further comprise a counter or a real time counter comprised or associated with the one or more detectors. A further example is that the detectors are configured to receive an indication that detection is to be executed. That is, the availability indicator receives a trigger signal from a remote entity and in response to the reception of the trigger signal the detection of e.g. the absolute position of the indicating part is executed. According to examples, the availability indicator then comprises at least an antenna and associated circuitry configured to receive a trigger signal.

To enable the detection of the current position or the change of position the one or more detectors may comprise sensors. Specifically, the one or more detectors, may according to embodiments, comprising at least one of a motion registration device, a gyro, an accelerometer, a tilt switch, a capacitive sensor, a magnetic flux sensor and a magneto resistive switch (the list is not exhaustive). Hence, each device is configured to detect at least one of the change of position of the indicating part 25 and the current position A, B of the indicating part 25. A motion registration device may be a device that is configured to register a movement, determine what kind of movement that has been registered and to transfer data associated with the registered movement to a remote entity. Further, when a magneto resistive switch is utilized and attached to the indicating part a magnetic field needs to present. This can e.g. be achieved by having a permanent magnet attached to the mounting devices such that the magneto resistive switch detects a change in the magnetic field when the indicating part is moved.

The one or more detectors are further configured to, in response to the detection; wirelessly transmit, to a remote entity, at least one of a position change signal indicative of the change of position of the indicating part 25 and a position status signal indicative of the current position of the indicating part 25. In other words, when a change of position is detected, this information is saved as a position change signal and transmitted to a remote entity. Said information may e.g. comprise the start position, the end position, or a message that indicates that a change has taken place. According to some embodiments, the change of position does not have to be a change of position from the first positon to the second position or reversely. In the same manner, when the current position of the indicating part (i.e. the availability state of the availability indicator) is detected, this information is saved as a position status signal and transmitted to a remote entity. Said information may e.g. comprise the actual position, or a message that indicates that a no change has taken place (indicating that a previously transmitted position status signal is still relevant).

According to embodiments, the position status signal is utilized or requested when the availability state of the availability indicator is not known.

The detector may comprise circuitry, e.g. an antenna and associated electronic circuitry, configured to wirelessly transmit data communication to a remote entity. Examples of wireless communication may be cellular communication, in licensed spectrum, as 2G or Narrowband Internet of Things, NB-IoT, and short-range or wide-range communication, in unlicensed bands, as WiFi, Bluetooth or LoRa, or equivalent communication methods.

In other words and according to some embodiments the availability indicator comprises an antenna module comprising circuitry configured to at least transmit, to a remote entity, a position change signal and/or a position status signal. The availability indicator further comprises one or more sensor modules comprising circuitry configured to detect movement or absolute positon of the indicating part. The modules may be comprised in a detector or positioned elsewhere but associated to the detector by circuitry.

The remote entity can be any electronic device configured to at least receive communication from the one or more detectors. It can for example be a cloud storage medium, a central server, mobile terminal, mobile phone, smart watch, tablet, usb-stick, laptop, a stationary or mobile wireless device for machine-to-machine communication, personal digital assistants, timekeeping devices, different computers, glasses (electronic or otherwise), portable storage devices an integrated or embedded wireless card, an externally plugged in wireless card, a dongle, external servers etc.

According to some embodiments, the one or more detectors are further configured to wirelessly receive, from the remote entity, a status change signal indicative of a change of status of the indicating part. The status change signal may comprise information indicating that the indication part needs to change its status, e.g. change from available to occupied or the other way around. It may according to examples comprise information indicating which availability state the availability indicator should show.

Further, in response to the reception, the one or more detectors are configured to cause a further change of position of the indicating part. That is, the detectors comprise means that are able to change the state of availability indicator. In some embodiments this means that the indicating part is moved from the first position A to the second position B or reversely. In one example at least one sensor comprises a motor operationally coupled to the indicating part such that the motor is able to cause a movement of the indicating part between positions. In another example, at least one magnet is attached to the indicating part and two electromagnets are e.g. attached to the mounting brackets. The state of the availability indicator may then be changed by activation of the proper electromagnet.

Hence, it is possible to change the position of the indicating part, i.e. the state of the availability indicator, from a remote location. In one example, when an occupiable space is booked (i.e. remotely controlled), then, in addition to disappearing from the monitoring system, the availability indicator changes its status to occupied.

An additional advantage is that an occupiable space can be declared available from a remote location, e.g. in a guest harbour when a guest has forgotten to turn the sign before leaving.

According to embodiments, the at least one of the one or more detectors 27 is exchangeable.

Hence, it is easy to exchange discharged, old or defect detectors.

According to embodiments, at least one of the detectors is waterproof. In one example the availability indicator is mechanically constructed such that water is drained and the performance of the communication (e.g. the antenna properties) with a remote entity is not adversely affected. Hence, the availability indicator can be utilized in a harsh environment, e.g. a stormy marina.

According to some embodiments, the availability indicator 11 is a harbour availability sign for boat berth. According to one example of a harbour availability sign the first position A corresponds to the boat berth being vacant and the second position B corresponds to the boat berth being occupied.

According to some embodiments, the detector/s can be can be fitted with existing variants of the mechanic structure, as previously discussed, and implemented in a fully backwards compatible manner, on existing infrastructure.

The given aspects, embodiments and example provide an availability indicator where the status of the availability indicator, e.g. occupied or available, can be monitored at a position far away from the actual position of the availability indicator. The provided device simplifies e.g. mooring in a marina by making it easier to find available boat berths in comparison with the properties of commonly known harbour signs. For example, it is easy to communicating the state of a berth spot in a leisure craft marina - occupied or available. It is further provided for flexibility in the determination of the state of the availability indicator since both a change of position and a current position can be detected.

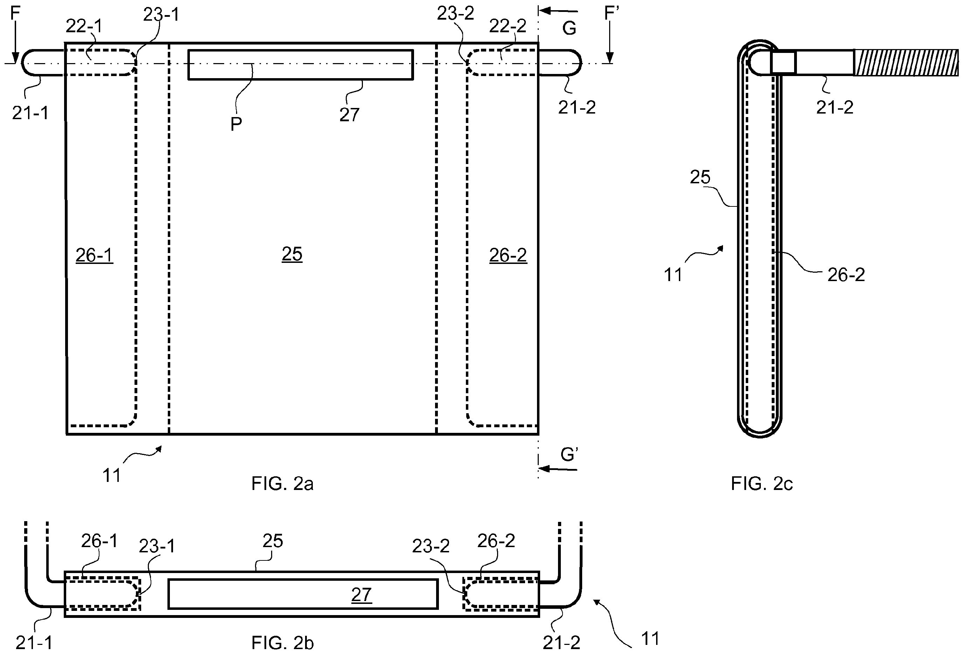

Figures 2a-2c are schematic drawings illustrating different views of an example availability indicator according to some embodiments. Figure 2a illustrates a front view. Figure 2b illustrates a top view (the cross section denoted GG' in Figure 2a) and Figure 2c illustrates a side view (the cross section denoted FF' in Figure 2a).

The one or more mounting brackets 21-1, 21-2 of the availability indicator, according to the embodiments in Figure 2, comprise a first mounting bracket 21-1 and a second mounting bracket 21-2. Hence, according to examples, two mounting brackets comprising L-shaped parts are present. Moreover, a first part of the first mounting bracket 22-1 and a first part the second mounting bracket 22-2 are arranged along a pivot axis P. In Figure 2, the respective L-shaped parts of the first and the second mounting bracket comprise the respective first parts. Furthermore, the indicating part 25 comprises at least two slots 26-1, 26-2, comprising a first slot 26-1 and a second slot 26-2. The first slot 26-1 is configured to engage with an end of the first part of the first mounting bracket 23-1 and the second slot 26-2 is configured to engage with an end of the first part of the second mounting bracket 23-2.

According to some embodiments, of the availability indicator as exemplified in Figures 2a-2c, a change of position of the indicating part 25 comprises a movement of the indicating part 25 wherein the respective ends of the first part of the first mounting bracket 23-1 and the first part the second mounting bracket 23-2 slide along respective first slot 26-1 and second slot 26-2. The change of position further comprises and a rotation of the indicating part 25 around the pivot axis P. Hence, movement and rotation of the indicating part, as shown in Figures 1b-1e, are obtained.

According to first alternative embodiments of the availability indicator as exemplified in Figures 2a-2c, at least one of the one or more detectors 27 is positioned between the first part of the first mounting bracket 22-1 and the first part the second mounting bracket 22-2 when the indicating part 25 is in the first position A or in the second position B. This situation has been discussed previously in relation to Figures 1b-1e.

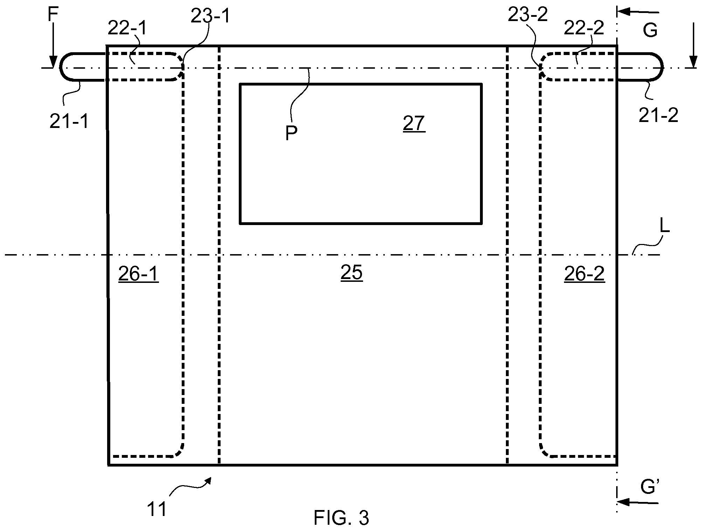

Figure 3 illustrate an availability indicator according to second alternative embodiments wherein at least one of the one or more detectors 27 is positioned in a horizontal dimension between the first part of the first mounting bracket 22-1 and the first part the second mounting bracket 22-2 and is positioned in a vertical dimension above a horizontal center line L of the indicating part 25 when the indicating part 25 is in the first position A or in the second position B. That is, at least one detector is positioned between one of the horizontal edges of the indicating part and a horizontal center line L. Hence, said detector is positioned such that no part coincides with the center line L. The horizontal center line L is positioned at the same distance from the respective horizontal edges of the indicating part. By horizontal edges means the edges that are substantially parallel with the earth's surface.

The same kind of detectors may be utilized in the embodiments discussed in relation to Figures 2 and 3. In order to detect a change of position of the indicating part the detector may in one example comprise an accelerometer. Further, to detect the current (i.e. the absolute position) of the indicating part, a sensor configured to detect the distance to e.g. the mounting brackets or any other stationary element may be used. The absolute position of the indicating part may in another example be detected by a sensor configured to detect the sensor's absolute position in relation to the earth. For example, in positon A, the sensor is in an upright position whereas, when the indicating part is in position B, the sensor is up-side-down. Moreover, according to further examples, the position of a detector in relation to the horizontal center line L may also be utilized in the determination of the absolute position. That is, flexibility is given when it comes to the construction and the features of the detector.

Further, mechanical features are present enabling the indicating part of the availability indicator to be moved such that a detector detects the movement of the indicating part or the absolute positon of the indicating part in order to indicate the state of availability. In some examples, at least one of the one or more detectors are kept in place by the inner structure of the indicating part. For example, the one or more detectors are positioned in one or more cavities wherein the cavities are configured to host at least one detector each. In one example, the cavities may be larger than the hosting sensor, such that the sensor is able to move inside the cavity when the indicating part is moved or rotated.

The abovementioned alternative positions of detectors or the functional features associated with the detectors should not be seen as limited. Any position where a detector is configured to do at least one of; detect the absolute position of the indicating part, detect a change of position of the indicating part, transmit a positon change signal or a position status signal, are to be seen as comprised in the claimed subject matter.

According to embodiments, the availability indicator further comprises an energy harvesting device for powering the one or more detectors 27. Hence, a device for energy harvesting is utilized in order to make the availability indicator independent of or at least less dependent of a finite power source, e.g. a battery.

In one example, an application of an external device for charging the availability indicator is utilized.

That is, an energy self-supporting availability indicator is provided.

According to embodiments, an indication of the availability by the positions A, B is visible independently of lightening conditions. For example, the state of the availability indicator is locally visible during day and night time. According to further examples, the indication of the availability by the positions A, B is visible by at least colour coding and illuminating technology, preferably light reflective material. In one example, "available" is signalled by green reflection tape, and "occupied" is signalled by red reflection tape.

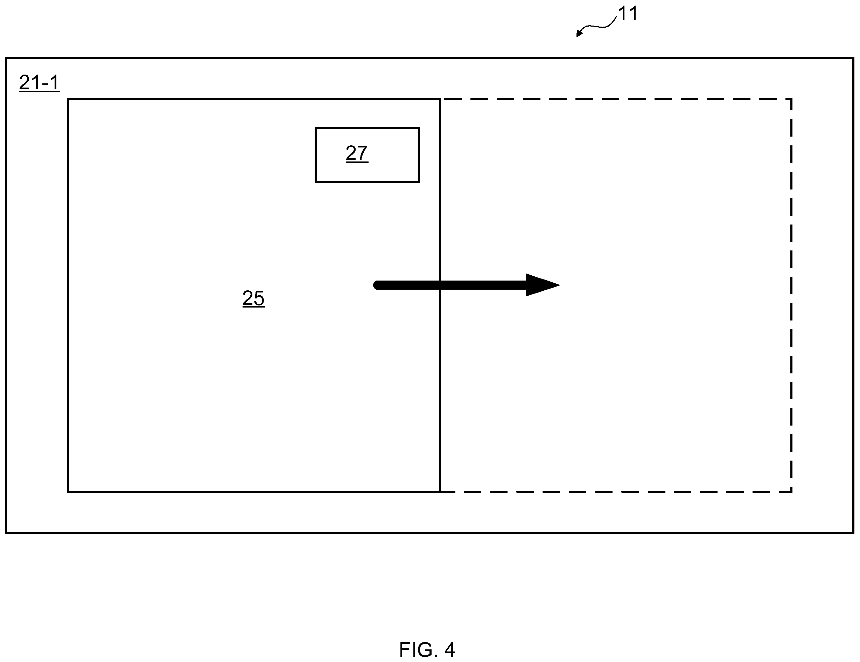

Figure 4 is a schematic drawing illustrating a front view of an example availability indicator according to some embodiments. It comprises a mounting bracket 21-1 comprising an essentially flat surface. The availability indicator 11 further comprises an indicating part 25 movably connected to the mounting bracket 21-1. One part of the mounting bracket is coloured green (signalling availability) and one part is coloured red (signalling occupied). In one example, the indicating part covers the red coloured part when it is positioned to the left (as shown in Figure 4), hence signalling that the spot is vacant (position A). In the same manner, the indicating part covers the red coloured part when it is positioned to the right (position B, not shown in Figure 4), signalling that the spot is occupied.

In Figure 4 the detector is attached to the indicating part. The detector may in one example comprise an accelerometer which detects a change of position of the indicating part.

According to some embodiments, a permanent magnet can be attached to the mounting bracket and a magneto resistive switch can be attached to the indicating part. The magneto resistive switch then detects a change of the magnetic field of the permanent magnet when the indicating part is moved.

According to a second aspect, the present disclosure also relates to a method at an availability indicator. The availability indicator comprises one or more mounting brackets fixable to a mounting surface. It further comprises an indicating part movably connected to the one or more mounting brackets, wherein the indicating part is movable, between at least two positions A, B, in relation to the one or more mounting brackets. Moreover, the availability indicator comprises one or more detectors.

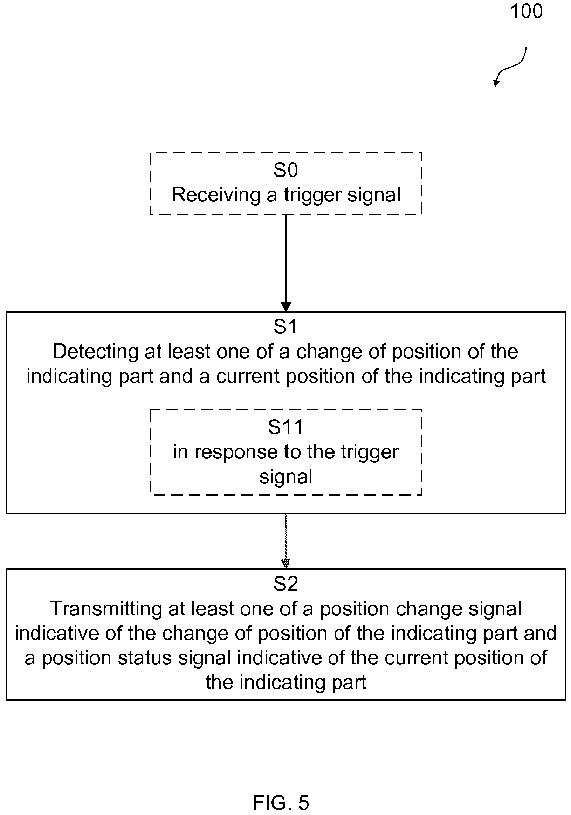

Figure 5 shows a flowchart illustrating example method steps according to the second aspect. That is, the method comprises detecting S1 in the one or more detectors at least one of a change of position of the indicating part and a current position A, B of the indicating part. In one example, the step of detecting may be preceded with receiving S0 a trigger signal, this trigger signal may be transmitted by a remote entity or a counter or a real time counter comprised in the availability indicator, as discussed in relation to Figure 1. Further the step of detecting further comprises detecting S11, in response to the trigger signal, at least one of a change of position of the indicating part and a current position of the indicating part. In one example, it is only the detection of a current position that is executed in response to a trigger signal, whereas the detection of a change of position of the indicating part is triggered by a movement of the indicating part.

The method, as illustrated in Figure 5, further comprises in response to the detection, wirelessly transmitting S2, to a remote entity, at least one of a position change signal indicative of the change of position of the indicating part and a position status signal indicative of the current position of the indicating part.

In some embodiments, the second aspect may comprise features corresponding to those of the first aspect and its associated embodiments.

Thus, there is provided herein a method in an availability indicator. The same advantages and benefits are obtained as for the corresponding features of any of the first aspect and its associated embodiments.

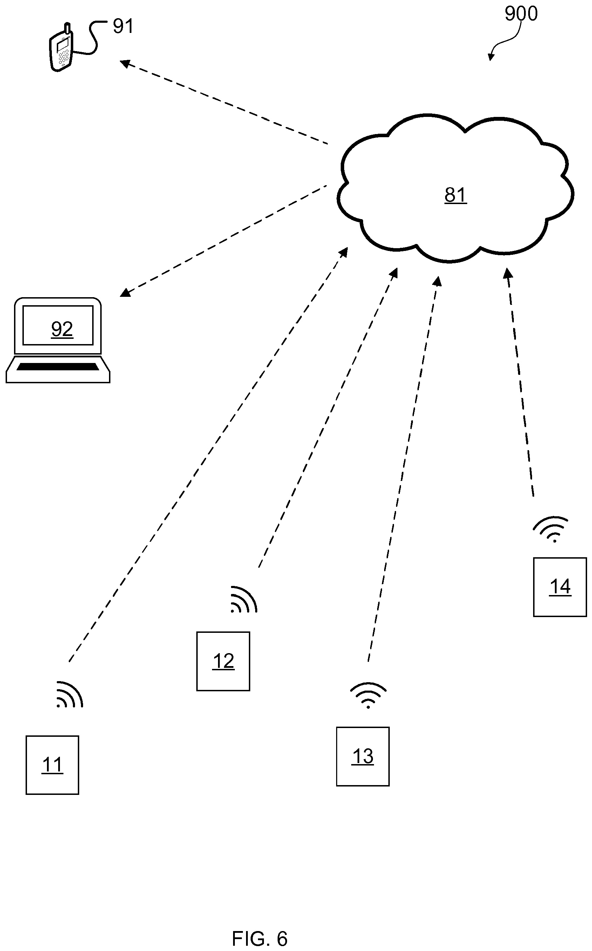

According to a third aspect, the present disclosure also relates to an availability monitoring system 900 as figuratively visualized in Figure 6. The figure shows an availability monitoring system 900 comprising one or more availability indicators 11, 12, 13, 14 according to any of the aspects, embodiments and examples discussed in relation to Figures 1-4 and/or an availability indicator configured to perform method steps as described in connection with Figure 5.

The availability monitoring system further comprises one or more user equipment 91, 92. Examples of user equipment 91, 92 include, but are not limited to, wireless communication devices, mobile phones, handsets, wireless local loop phones, smartphones, laptop computers, and tablet computers.

The availability monitoring system further comprises one or more remote entities 81. A non-exhaustive list of examples of remote entities has been given in reference to Figure 1. According to examples, the remote entity may be a user equipment, UE.

The one or more remote entities 81 are configured to receive, from the one or more availability indicators 11, 12, 13, 14, at least one of the position change signal indicative of the change of position and a position status signal indicative of the current position of the indicating part.

Further, the one or more remote entities 81 are configured to cause, in response to the reception, generation of an availability indication and transferring of the availability indication to a user interface of one or more user equipment 91, 92.

According to examples, the user equipment typically communicates with the availability indicator, via a cloud service 81 (remote entity) with associated server and database implementation, and the transferring of the availability indication means that information regarding the availability is displayed on a user interface of the user equipment.

Further, the user equipment may in some instances also communicate directly with the indicator. Hence, according to examples, when the remote entity is a user equipment, then the user equipment communicates directly with the availability indicator and the transferring of the availability indication means that information regarding the availability is displayed on a user interface of the user equipment.

According to examples, when the remote entity is separate from at least one user equipment, then the transferring also comprises transmitting of the availability indication from the remote entity to the user equipment where it is displayed.

According to examples the indication to a user interface can for example be a smartphone application, a web application or an application programming interface towards other services, used by clients of the availability indication system, or by administrators or owners of the occupiable space, for administration and monitoring purpose.

According to examples, the availability indication can be an indication that is utilized to update an availability map of available berth spots at a marina. This availability map can according to examples be available to users by an application (app), i.e. an application programming interface.

According to further examples, a potential boat visitor has shown interest in a specific harbour berth spot. This interest has been registered in an application (app), e.g. a user interface. When an availability indicator positioned at the specific harbour berth indicates to the remote entity, e.g. a cloud solution, which it is not occupied, then the potential boat visitor gets that information via the app in the user equipment.

According to some embodiments, it is provided a wireless connected solution, cellular or short-range, that digitalizes, e.g., advertise and locate available marina berth spots for leisure craft as well as e.g. handling payment and providing consumer interaction.

According to some examples, application of a device of payment via mobile phone (NFC or application-based) is managed by the one or more remote entities.

According to further examples, the remote entity is an internet server, with database for bookkeeping and services for location and payment of temporary marina mooring spots.

Hence, an availability monitoring system is presented where a remote user with ease can pin point available spots. For example, a utilization of the system in a guest harbour may provide a surveyable and easy-to- access mapping of available marina berth spots for leisure craft.

In some embodiments, the third aspect may comprise features corresponding to those of the first and/or second aspects and their associated embodiments.

Thus, there is provided herein a method in an availability monitoring system. The same advantages and benefits are obtained as for the corresponding features of any of the first and/ or second aspects and their associated embodiments.

In other words, and according to examples, it is provided, at a remote entity, the knowledge of the availability state of one or several availability indicators. Moreover, when a change of state takes place at an availability indicator the remote entity gets an update. It is advantageous to be able to detect the availability state even though a change of position of the indicating part has not taken place. This ability makes the system more robust and trustworthy. Due to e.g. noise or interruptions of the wireless communication the state of availability of a specific spot may be lost. Hence, by letting the availability indicator transmit its absolute state within certain time intervals or to let the remote entity request an update from the availability indicator the system is back on track again without manual intervention.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

While various aspects and embodiments of the present disclosure have been described above, it should be understood that they have been presented by way of example only, and not limitation. Thus, the breadth and scope of the present disclosure should not be limited by any of the above described exemplary embodiments.

Additionally, while the actions and processes described herein and illustrated in the drawings are shown as a sequence of steps, this was done solely for the sake of illustration. Accordingly, it is contemplated that some steps may be added, and some steps may be performed in parallel.

## Claims

1. A manually managed availability indicator (11) in form of a sign for indicating of availability of an occupiable space the availability indicator comprising:
- one or more mounting brackets (21-1,21-2) fixable to a mounting surface, wherein the
one or more mounting brackets (21-1,21-2) comprise a first mounting bracket (21-1) and a second mounting bracket (21-2), and wherein a first part of the first mounting bracket (22-1) and a first part the second mounting bracket (22-2) are arranged along a pivot axis (P);
an indicating part (25) movably connected to the one or more mounting brackets (21-1,21-2), wherein the indicating part (25) is movable, between at least two positions (A,B), in relation to the one or more mounting brackets (21-1,21-2), wherein the first position (A) is for indicating a state of vacancy of the occupiable space and the second position (B) is for indicating a state of occupancy of the occupiable space, and
wherein the indicating part (25) comprises at least two slots (26-1,26-2), comprising a first slot (26-1) and a second slot (26-2), wherein the first slot (26-1) is configured to engage with an end of the first part of the first mounting bracket (23-1) and the second slot (26-2) is configured to engage with an end of the first part of the second mounting bracket (23-2); and
- one or more detectors (27), configured to:
o detect at least one of a change of position of the indicating part (25) and a current position (A,B) of the indicating part (25); and
o in response to the detection, wirelessly transmit, to a remote entity, at least one of a position change signal indicative of the change of position of the indicating part (25) and a position status signal indicative of the current position of the indicating part (25).

2. The availability indicator (11) according to claim 1, wherein the at least two positions (A, B) comprise a first position (A) and a second position (B):
- the first position (A) for indicating vacancy of the occupiable space; and
- the second position (B) for indicating occupancy of the occupiable space.

3. The availability indicator (11) according to any of claims 1-2, wherein a change of position of the indicating part (25) comprises:
- a movement of the indicating part (25) wherein the respective ends of the first part of the first mounting bracket (23-1) and the first part the second mounting bracket (23-2) slide along respective first slot (26-1) and second slot (26-2); and
- a rotation of the indicating part (25) around the pivot axis (P).

4. The availability indicator (11) according to any of claims 1-3, wherein at least one of the one or more detectors (27) is positioned in a horizontal dimension between the first part of the first mounting bracket (22-1) and the first part the second mounting bracket (22-2) and is positioned in a vertical dimension above a horizontal center line (L) of the indicating part (25) when the indicating part (25) is in the first position (A) or in the second position (B).

5. The availability indicator (11) according to claim 4, wherein at least one of the one or more detectors (27) is positioned between the first part of the first mounting bracket (22-1) and the first part the second mounting bracket (22-2) when the indicating part (25) is in the first position (A) or in the second position (B).

6. The availability indicator (11) according to any of claims 1-5, wherein the one or more detectors (27) comprise at least one of:
- a motion registration device;
- a gyro;
- a tilt switch;
- a capacitive sensor;
- a magnetic flux sensor;
- an accelerometer; and
- a magneto resistive switch;
each configured to detect at least one of the change of position of the indicating part (25) and the current position (A,B) of the indicating part (25).

7. The availability indicator (11) according to any of claims 1-6, wherein the availability indicator further comprises an energy harvesting device for powering the one or more detectors (27).

8. The availability indicator (11) according to any claims 1-7, wherein the availability indicator (11) is a harbour availability sign for boat berth.

9. The availability indicator (11) according to claim 8, wherein the first position (A) corresponds to the boat berth being vacant and the second position (B) corresponds to the boat berth being occupied.

10. A method at a manually managed availability indicator in form of a sign for indicating of availability of an occupiable space; the indicator comprising:
• one or more mounting brackets (21-1,21-2) fixable to a mounting surface wherein the one or more mounting brackets (21-1,21-2) comprise a first mounting bracket (21-1) and a second mounting bracket (21-2), and wherein a first part of the first mounting bracket (22-1) and a first part the second mounting bracket (22-2) are arranged along a pivot axis (P);
• an indicating part (25) movably connected to the one or more mounting brackets (21-1,21-2), wherein the indicating part (25) is movable, between at least two positions (A,B), in relation to the one or more mounting brackets (21-1,21-2),wherein the first position (A) is for indicating a state of vacancy of the occupiable space and the second position (B) is for indicating a state of occupancy of the occupiable space, and wherein the indicating part (25) comprises at least two slots (26-1,26-2), comprising a first slot (26-1) and a second slot (26-2), wherein the first slot (26-1) is configured to engage with an end of the first part of the first mounting bracket (23-1) and the second slot (26-2) is configured to engage with an end of the first part of the second mounting bracket (23-2); and one or more detectors;
wherein the method is **characterized by**:
- detecting (S1) in the one or more detectors at least one of a change of position of the indicating part and a current position (A,B) of the indicating part; and
- in response to the detection, wirelessly transmitting (S2), to a remote entity, at least one of a position change signal indicative of the change of position of the indicating part and a position status signal indicative of the current position of the indicating part.

11. An availability monitoring system (900) **characterized by** comprising:
• one or more availability indicators (11,12,13,14) according to any of claims 1-9;
• one or more remote entities (81); and
• one or more user equipment (91,92);
wherein the one or more remote entities (81) are configured to:
- receive, from the one or more availability indicators (11,12,13,14), at least one of the position change signal indicative of the change of position and a position status signal indicative of the current position of the indicating part; and
- cause, in response to the reception, generation of an availability indication and transferring of the availability indication to a user interface of one or more user equipment (91, 92).

## Patentansprüche

1. Manuell bediente Verfügbarkeitsanzeige (11) in Form eines Hinweises zum Anzeigen der Verfügbarkeit eines belegbaren Raums; indem die Verfügbarkeitsanzeige Folgendes umfasst:
- eine oder mehrere Montagehalterungen (21-1,21-2), die an einer Montagefläche fixiert werden können, wobei die eine oder mehrere Montagehalterungen (21-1,21-2) eine erste Montagehalterung (21-1) und eine zweite Montagehalterung (21-2) umfassen, und wobei ein erster Teil der ersten Montagehalterung (22-1) und ein erster Teil der zweiten Montagehalterung (22-2) entlang einer Schwenkachse (P) angeordnet sind; ein Anzeigeteil (25), der mit der einen oder mehreren Montagehalterungen (21-1,21-2) beweglich verbunden ist, wobei der Anzeigeteil (25) zwischen mindestens zwei Positionen (A,B) im Verhältnis zu der einen oder mehreren Montagehalterungen (21-1,21-2) beweglich ist, wobei die erste Position (A) zum Anzeigen eines Zustands der Leere des belegbaren Raums und die zweite Position (B) zum Anzeigen eines Zustands der Belegung des belegbaren Raums ausgelegt ist, und wobei der Anzeigeteil (25) mindestens zwei Schlitze (26-1,26-2) umfasst, umfassend einen ersten Schlitz (26-1) und einen zweiten Schlitz (26-2), wobei der erste Schlitz (26-1) dafür ausgelegt ist, mit einem Ende des ersten Teils der ersten Montagehalterung (23-1) einzugreifen, und der zweite Schlitz (26-2) dafür ausgelegt ist, mit einem Ende des ersten Teils der zweiten Montagehalterung (23-2) einzugreifen; und
- einen oder mehrere Detektoren (27), ausgelegt zum:
o Erkennen mindestens einer von einer Positionsänderung des Anzeigeteils (25) und einer aktuellen Position (A,B) des Anzeigeteils (25); und
o als Reaktion auf die Erkennung, drahtloses Übertragen von mindestens einem Positionsänderungssignal, das die Positionsänderung des Anzeigeteils (25) anzeigt, und einem Positionsstatussignal, das die aktuelle Position des Anzeigeteils (25) anzeigt, an eine Ferneinheit.

2. Verfügbarkeitsanzeige (11) nach Anspruch 1, wobei die mindestens zwei Positionen (A, B) eine erste Position (A) und eine zweite Position (B) umfassen:
- die erste Position (A) zum Anzeigen einer Leere des belegbaren Raums; und
- die zweite Position (B) zum Anzeigen einer Belegung des belegbaren Raums.

3. Verfügbarkeitsanzeige (11) nach einem der Ansprüche 1-2, wobei eine Positionsänderung des Anzeigeteils (25) Folgendes umfasst:
- eine Bewegung des Anzeigeteils (25), wobei die jeweiligen Enden des ersten Teils der ersten Montagehalterung (23-1) und des ersten Teils der zweiten Montagehalterung (23-2) entlang einem jeweiligen ersten Schlitz (26-1) und zweiten Schlitz (26-2) gleiten; und
- eine Drehung des Anzeigeteils (25) um die Schwenkachse (P) herum.

4. Verfügbarkeitsanzeige (11) nach einem der Ansprüche 1-3, wobei mindestens einer von dem einen oder mehreren Detektoren (27) in einer horizontalen Dimension zwischen dem ersten Teil der ersten Montagehalterung (22-1) und dem ersten Teil der zweiten Montagehalterung (22-2) positioniert ist und in einer vertikalen Dimension oberhalb einer horizontalen Mittellinie (L) des Anzeigeteils (25) positioniert ist, wenn der Anzeigeteil (25) in der ersten Position (A) oder in der zweiten Position (B) ist.

5. Verfügbarkeitsanzeige (11) nach Anspruch 4, wobei mindestens einer von dem einen oder mehreren Detektoren (27) zwischen dem ersten Teil der ersten Montagehalterung (22-1) und dem ersten Teil der zweiten Montagehalterung (22-2) positioniert ist, wenn der Anzeigeteil (25) in der ersten Position (A) oder in der zweiten Position (B) ist.

6. Verfügbarkeitsanzeige (11) nach einem der Ansprüche 1-5, wobei der eine oder mehrere Detektoren (27) mindestens eine der folgenden umfasst:
- eine Bewegungserfassungsvorrichtung;
- einen Kreisel;
- einen Kippschalter;
- einen kapazitiven Sensor;
- einen magnetischen Flusssensor;
- einen Beschleunigungsmesser; und
- einen magnetoresistiven Schalter;
jeweils dafür ausgelegt, mindestens eine der Positionsänderung des Anzeigeteils (25) und der aktuellen Position (A,B) des Anzeigeteils (25) zu erkennen.

7. Verfügbarkeitsanzeige (11) nach einem der Ansprüche 1-6, wobei die Verfügbarkeitsanzeige weiter eine Energiegewinnungsvorrichtung zum Versorgen des einen oder mehrere Detektoren (27) umfasst.

8. Verfügbarkeitsanzeige (11) nach einem der Ansprüche 1-7, wobei die Verfügbarkeitsanzeige (11) ein Hafenverfügbarkeitshinweis für einen Schiffsankerplatz ist.

9. Verfügbarkeitsanzeige (11) nach Anspruch 8, wobei die erste Position (A) dem leeren Schiffsankerplatz entspricht, und die zweite Position (B) dem belegten Schiffsankerplatz entspricht.

10. Verfahren an einer manuell bedienten Verfügbarkeitsanzeige in Form eines Hinweises zum Anzeigen der Verfügbarkeit eines belegbaren Raums; indem die Anzeige Folgendes umfasst:
• eine oder mehrere Montagehalterungen (21-1,21-2), die an einer Montagefläche fixiert werden können, wobei die eine oder mehrere Montagehalterungen (21-1,21-2) eine erste Montagehalterung (21-1) und eine zweite Montagehalterung (21-2) umfassen, und wobei ein erster Teil der ersten Montagehalterung (22-1) und ein erster Teil der zweiten Montagehalterung (22-2) entlang einer Schwenkachse (P) angeordnet sind;
• ein Anzeigeteil (25), der mit der einen oder mehreren Montagehalterungen (21-1,21-2) beweglich verbunden ist, wobei der Anzeigeteil (25) zwischen mindestens zwei Positionen (A,B) im Verhältnis zu der einen oder mehreren Montagehalterungen (21-1,21-2) beweglich ist, wobei die erste Position (A) zum Anzeigen eines Zustands der Leere des belegbaren Raums und die zweite Position (B) zum Anzeigen eines Zustands der Belegung des belegbaren Raums ausgelegt ist, und wobei der Anzeigeteil (25) mindestens zwei Schlitze (26-1,26-2) umfasst, umfassend einen ersten Schlitz (26-1) und einen zweiten Schlitz (26-2), wobei der erste Schlitz (26-1) dafür ausgelegt ist, mit einem Ende des ersten Teils der ersten Montagehalterung (23-1) einzugreifen, und der zweite Schlitz (26-2) dafür ausgelegt ist, mit einem Ende des ersten Teils der zweiten Montagehalterung (23-2) einzugreifen; und einen oder mehrere Detektoren;
wobei das Verfahren durch Folgendes gekennzeichnet ist:
- Erkennen (S1) in dem einen oder mehreren Detektoren mindestens einer von einer Positionsänderung des Anzeigeteils und einer aktuellen Position (A,B) des Anzeigeteils; und
- als Reaktion auf die Erkennung, drahtloses Übertragen (S2) von mindestens einem Positionsänderungssignal, das die Positionsänderung des Anzeigeteils anzeigt, und einem Positionsstatussignal, das die aktuelle Position des Anzeigeteils anzeigt, an eine Ferneinheit.

11. Verfügbarkeitsüberwachungssystem (900), **dadurch gekennzeichnet, dass** es Folgendes umfasst:
• eine oder mehrere Verfügbarkeitsanzeigen (11,12,13,14) nach einem der Ansprüche 1-9;
• eine oder mehrere Ferneinheiten (81); und
• eine oder mehrere Benutzereinrichtungen (91,92);
wobei die eine oder mehrere Ferneinheiten (81) dafür ausgelegt sind:
- Empfangen, von der einen oder mehreren Verfügbarkeitsanzeigen (11,12,13,14), mindestens eines des Positionsänderungssignals, das die Positionsänderung anzeigt, und eines Positionsstatussignals, das die aktuelle Position des Anzeigeteils anzeigt; und
- Verursachen, als Reaktion auf den Empfang, einer Erzeugung einer Verfügbarkeitsanzeige und Übertragen der Verfügbarkeitsanzeige an eine Benutzerschnittstelle der einen oder mehreren Benutzereinrichtungen (91, 92).

## Revendications

1. Indicateur de disponibilité géré manuellement (11) sous la forme d'un signe pour indiquer la disponibilité d'un espace occupable ; l'indicateur de disponibilité comprenant :
- un ou plusieurs supports de montage (21-1,21-2) pouvant être fixés à une surface de montage, le ou les supports de montage (21-1,21-2) comprenant un premier support de montage (21-1) et un deuxième support de montage (21-2), et une première partie du premier support de montage (22-1) et une première partie du deuxième support de montage (22-2) étant arrangées le long d'un axe de pivotement (P) ;
- une partie d'indication (25) reliée de façon mobile au ou aux supports de montage (21-1,21-2), la partie d'indication (25) étant mobile, entre au moins deux positions (A, B), par rapport au ou aux supports de montage (21-1,21-2), la première position (A) étant destinée à indiquer un état de lacune de l'espace occupable, et la deuxième position (B) étant destinée à indiquer un état d'occupation de l'espace occupable, et la partie d'indication (25) comprenant au moins deux fentes (26-1,26-2), comprenant une première fente (26-1) et une deuxième fente (26-2), la première fente (26-1) étant configurée pour venir en prise avec une extrémité de la première partie du premier support de montage (23-1), et la deuxième fente (26-2) étant configurée pour venir en prise avec une extrémité de la première partie du deuxième support de montage (23-2) ; et
- un ou plusieurs détecteurs (27), configurés pour :
o détecter au moins l'un d'un changement de position de la partie d'indication (25) et d'un changement d'une position actuelle (A, B) de la partie d'indication (25) ; et
o en réponse à la détection, transmettre sans fil, à une entité distante, au moins l'un d'un signal de changement de position indiquant le changement de position de la partie d'indication (25) et d'un signal d'état de position indiquant la position actuelle de la partie d'indication (25).

2. Indicateur de disponibilité (11) selon la revendication 1, dans lequel les au moins deux positions (A, B) comprennent une première position (A) et une deuxième position (B) :
- la première position (A) étant destinée à indiquer une lacune de l'espace occupable ; et
- la deuxième position (B) étant destinée à indiquer l'occupation de l'espace occupable.

3. Indicateur de disponibilité (11) selon l'une quelconque des revendication 1 à 2, dans lequel un changement de position de la partie d'indication (25) comprend :
- un mouvement de la partie d'indication (25), les extrémités respectives de la première partie du premier support de montage (23-1) et de la première partie du deuxième support de montage (23-2) coulissent le long respectivement de la première fente (26-1) et de la deuxième fente (26-2) ; et
- une rotation de la partie d'indication (25) autour de l'axe de pivotement (P).

4. Indicateur de disponibilité (11) selon l'une quelconque des revendication 1 à 3, dans lequel au moins l'un du ou des détecteurs (27) est positionné dans une dimension horizontale entre la première partie du premier support de montage (22-1) et la première partie du deuxième support de montage (22-2) et est positionné dans une dimension verticale au-dessus d'une ligne centrale horizontale (L) de la partie d'indication (25) lorsque la partie d'indication (25) se trouve dans la première position (A) ou dans la deuxième position (B).

5. Indicateur de disponibilité (11) selon la revendication 4, dans lequel au moins l'un du ou des détecteurs (27) est positionné dans la première partie du premier support de montage (22-1) et la première partie du deuxième support de montage (22-2), lorsque la partie d'indication (25) se trouve dans la première position (A) ou dans la deuxième position (B).

6. Indicateur de disponibilité (11) selon l'une quelconque des revendication 1 à 5, dans lequel le ou les détecteurs (27) comprennent au moins l'un :
- d'un dispositif d'enregistrement de mouvement ;
- d'un gyroscope ;
- d'un commutateur d'inclinaison ;
- d'un capteur capacitif ;
- d'un capteur de flux magnétique ;
- d'un accéléromètre ; et
- d'un interrupteur magnéto-résistif ;
dont chacun étant configuré pour détecter au moins l'un du changement de position de la partie d'indication (25) et du changement de la position actuelle (A, B) de la partie d'indication (25).

7. Indicateur de disponibilité (11) selon l'une quelconque des revendications 1 à 6, dans lequel l'indicateur de disponibilité comprend en outre un dispositif de collecte d'énergie pour alimenter le ou les détecteurs (27).

8. Indicateur de disponibilité (11) selon l'une quelconque des revendications 1 à 7, dans lequel l'indicateur de disponibilité (11) est un signe de disponibilité portuaire pour la couchette de bateau.

9. Indicateur de disponibilité (11) selon la revendication 8, dans lequel la première position (A) correspond à la couchette de bateau qui est vacante, et la deuxième position (B) correspond à la couchette de bateau qui est occupée.

10. Procédé au niveau d'un indicateur de disponibilité géré manuellement sous la forme d'un signe pour indiquer la disponibilité d'un espace occupable ; l'indicateur comprenant :
• un ou plusieurs supports de montage (21-1,21-2) pouvant être fixés à une surface de montage, le ou les supports de montage (21-1,21-2) comprenant un premier support de montage (21-1) et un deuxième support de montage (21-2), et une première partie du premier support de montage (22-1) et une première partie du deuxième support de montage (22-2) étant arrangées le long d'un axe de pivotement (P) ;
• une partie d'indication (25) reliée de façon mobile au ou aux supports de montage (21-1,21-2), la partie d'indication (25) étant mobile, entre au moins deux positions (A, B), par rapport au ou aux supports de montage (21-1,21-2), la première position (A) étant destinée à indiquer un état de lacune de l'espace occupable, et la deuxième position (B) étant destinée à indiquer un état d'occupation de l'espace occupable, et la partie d'indication (25) comprenant au moins deux fentes (26-1,26-2), comprenant une première fente (26-1) et une deuxième fente (26-2), la première fente (26-1) étant configurée pour venir en prise avec une extrémité de la première partie du premier support de montage (23-1), et la deuxième fente (26-2) étant configurée pour venir en prise avec une extrémité de la première partie du deuxième support de montage (23-2) ; et un ou plusieurs détecteurs ;
le procédé étant **caractérisé par** les étapes consistant à :
- détecter (S1) dans le ou les détecteurs au moins l'un d'un changement de position de la partie d'indication et d'un changement d'une position actuelle (A, B) de la partie d'indication ;
et
- en réponse à la détection, transmettre sans fil (S2), à une entité distante, au moins l'un d'un signal de changement de position indiquant le changement de position de la partie d'indication et d'un signal d'état de position indiquant la position actuelle de la partie d'indication.

11. Système de surveillance de disponibilité (900) **caractérisé en ce qu'**il comprend :
• un ou plusieurs indicateurs de disponibilité (11,12,13,14) selon l'une quelconque des revendications 1 à 9 ;
• une ou plusieurs entités distantes (81) ; et
• un ou plusieurs équipements utilisateurs (91,92) ;
dans lequel la ou les entités distantes (81) sont configurées pour :
- recevoir, à partir du ou des indicateurs de disponibilité (11,12,13,14), au moins l'un du signal de changement de position indiquant le changement de position et d'un signal d'état de position indiquant la position actuelle de la partie d'indication ; et
- provoquer, en réponse à la réception, la génération d'une indication de disponibilité et le transfert de l'indication de disponibilité à une interface utilisateur d'un ou de plusieurs équipements utilisateurs (91, 92).
